(19) Europäisches Patentamt / European Patent Office / Office européen des brevets

(11) **EP 4 542 266 A1**

(12) **EUROPEAN PATENT APPLICATION**

(43) Date of publication:
23.04.2025 Bulletin 2025/17

(21) Application number: 23204260.6

(22) Date of filing: 18.10.2023

(51) International Patent Classification (IPC):
**G01T 1/24** (2006.01)　　　**G01V 5/22** (2024.01)
**G01T 1/20** (2006.01)

(52) Cooperative Patent Classification (CPC):
**G01T 1/242; G01T 1/20181; G01V 5/224**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Detection Technology Oyj**
**90590 Oulu (FI)**

(72) Inventor: **Matikkala, Mikko**
**90590 Oulu (FI)**

(74) Representative: **Papula Oy**
**P.O. Box 981**
**00101 Helsinki (FI)**

(54) **RADIATION DETECTOR ARRANGEMENT**

(57)　According to an embodiment, a radiation detector arrangement comprises: a first plurality of detector rows configured to detect radiation in a first energy range; and a second plurality of detector rows configured to detect radiation in a second energy range, wherein the second energy range is different from the first energy range; wherein the first plurality of detector rows and the second plurality of detector rows are arranged for scanning an object moving in a movement direction and a number of the first plurality of detector rows per distance along the movement direction is greater than a number of the second plurality of detector rows per distance along the movement direction.

FIG. 1

EP 4 542 266 A1

## Description

### TECHNICAL FIELD

The present disclosure relates to the field of radiation detectors, and more particularly to a radiation detector arrangement, a computing device, an imaging apparatus, a method, and a computer program product.

### BACKGROUND

In dual-energy imaging, attenuation of electromagnetic radiation, such as x-rays, of an object in two energy ranges can be obtained. This information can then be used to generate a more detailed image of the object compared to if only a single energy range was used.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object to provide a radiation detector arrangement, a computing device, an imaging apparatus, a method, and a computer program product. The foregoing and other objects are achieved by the features of the independent claims. Further implementation forms are apparent from the dependent claims, the description and the figures.

According to a first aspect, a radiation detector arrangement comprises: a first plurality of detector rows configured to detect radiation in a first energy range; and a second plurality of detector rows configured to detect radiation in a second energy range, wherein the second energy range is different from the first energy range; wherein the first plurality of detector rows and the second plurality of detector rows are arranged for scanning an object moving in a movement direction and a number of the first plurality of detector rows per distance along the movement direction is greater than a number of the second plurality of detector rows per distance along the movement direction. The radiation detector arrangement can, for example, be used to dual-energy imaging with reduced costs.

In an implementation form of the first aspect, the radiation detector arrangement further comprises a circuit board, wherein the first plurality of detector rows is arranged onto a first side of the circuit board and the second plurality of detector rows is arranged onto a second side of the circuit board. The radiation detector arrangement can, for example, be efficiently integrated onto the circuit board.

In a further implementation form of the first aspect, the first plurality of detector rows and the second plurality of detectors rows are arranged to alternate between sets of the first plurality of detector rows and single rows of the second plurality of detectors rows along the movement direction.

In a further implementation form of the first aspect, the first plurality of detector rows comprises in-direct conversion detectors and the second plurality of detector rows comprises in-direct conversion detectors; the first plurality of detector rows comprises direct conversion detectors and the second plurality of detector rows comprises in-direct conversion detectors; the first plurality of detector rows comprises in-direct conversion detectors and the second plurality of detector rows comprises direct conversion detectors; or the first plurality of detector rows comprises in-direct conversion detectors and the second plurality of detector rows comprises direct conversion detectors. The radiation detector arrangement can, for example, be efficiently implemented using in-direct conversion detectors and/or direct conversion detectors.

In a further implementation form of the first aspect, each direct conversion detector comprises a quantum dot diode or a cadmium telluride detector and/or each in-direct conversion detector comprises a scintillator and a quantum dot photo diode, a scintillator and a silicon photomultiplier, or a scintillator and a low-gain avalanche diode.

In a further implementation form of the first aspect, the direct conversion detectors are configured to operate in an energy integrating mode or in a photon counting mode and/or the in-direct conversion detectors are configured to operate in an energy integrating mode or in a photon counting mode.

In a further implementation form of the first aspect, the radiation detector arrangement further comprises at least one filter structure arranged to block at least part of radiation outside the second energy range from entering the second plurality of detector rows.

According to a second aspect, a computing device comprises at least one processor and at least one memory including computer program code, the at least one memory and the computer program code configured to, with the at least one processor, cause the computing device to: obtain a first plurality of signals from a first plurality of detector rows; obtain a second plurality of signals from a second plurality of detector rows; calculate an at least spatially filtered signal based on the first plurality of signals; calculate a temporally filtered signal based on the second plurality of signals; calculate a filtered ratio based on the at least spatially filtered signal and the temporally filtered signal; calculate a first spatial output signal based on the first plurality of signals using time delay integration; and calculate a second spatial output signal based on the filtered ratio and the first spatial output signal.

In an implementation form of the second aspect, the at least one memory and the computer program code are further configured to, with the at least one processor, cause the computing device to calculate the at least spatially filtered signal based on the first plurality of signals using a moving average spatial filter, a moving median spatial filter, a moving spatial gaussian filter, or a moving spatial low-pass filter and/or calculate the temporally filtered signal based on the second plurality of signals using a moving average temporal filter, a moving median temporal filter, a moving temporal gaussian filter, or a moving temporal low-pass filter.

According to a third aspect, an imaging apparatus comprises the radiation detector arrangement according to the first aspect and the computing device according to the second aspect.

According to a fourth aspect, a method comprises: obtaining a first plurality of signals from a first plurality of detector rows; obtaining a second plurality of signals from a second plurality of detector rows; calculating an at least spatially filtered signal based on the first plurality of signals; calculating a temporally filtered signal based on the second plurality of signals; calculating a filtered ratio based on the at least spatially filtered signal and the temporally filtered signal; calculating a first spatial output signal based on the first plurality of signals using time delay integration; and calculating second spatial output signal based on the filtered ratio and the first spatial output signal.

In an implementation form of the fourth aspect, the calculating the at least spatially filtered signal based on the first plurality of signals is performed using a moving average spatial filter, a moving median spatial filter, a moving spatial gaussian filter, or a moving spatial low-pass filter and/or the calculating the temporally filtered signal based on the first plurality of signals is performed using a moving average temporal filter, a moving median temporal filter, a moving temporal gaussian filter, or a moving temporal low-pass filter.

According to a fifth aspect, a computer program product comprises program code configured to perform the method according to the third aspect when the computer program product is executed on a computer.

Many of the attendant features will be more readily appreciated as they become better understood by reference to the following detailed description considered in connection with the accompanying drawings.

## DESCRIPTION OF THE DRAWINGS

In the following, example embodiments are described in more detail with reference to the attached figures and drawings, in which:

Fig. 1 illustrates a schematic representation of a radiation detector arrangement according to an embodiment;

Fig. 2 illustrates a schematic representation of a radiation detector arrangement according to another embodiment;

Fig. 3 illustrates a schematic representation of a radiation detector arrangement according to another embodiment;

Fig. 4 illustrates a schematic representation of a radiation detector arrangement according to another embodiment;

Fig. 5 illustrates a schematic representation of a computing device according to an embodiment;

Fig. 6 illustrates a schematic representation of an imaging apparatus according to an embodiment;

Fig. 7 illustrates a schematic representation of an object being scanned during a plurality of time frames; and

Fig. 8 illustrates a flowchart representation of a method according to an embodiment.

In the following, identical reference signs refer to similar or at least functionally equivalent features.

## DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

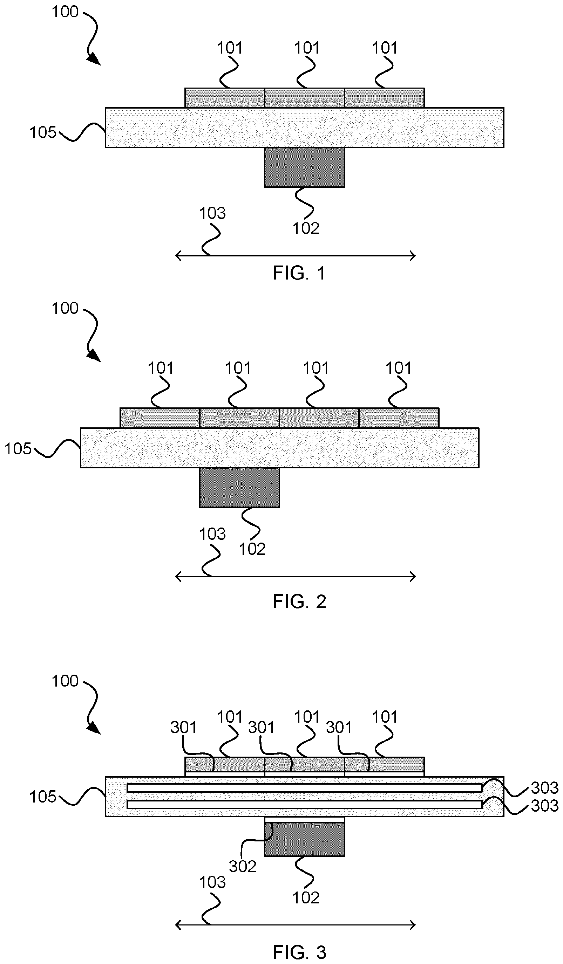

Fig. 1 illustrates a schematic representation of a radiation detector arrangement according to an embodiment.

According to an embodiment, a radiation detector arrangement 100 comprises a first plurality of detector rows 101 configured to detect radiation in a first energy range.

Herein, radiation may refer to electromagnetic radiation, such as x-ray and/or gamma ray radiation.

Herein, a radiation detector row may refer to a row of pixels configured to detect radiation. Each detector row may comprise any number of pixels.

The radiation detector arrangement 100 may further comprise a second plurality of detector rows 102 configured to detect radiation in a second energy range, wherein the second energy range is different from the first energy range.

For example, the first energy range may correspond to a so-called low energy (LE) in dual-energy x-ray imaging and the second energy range may correspond to, for example, a so-called high energy (HE) in dual-energy x-ray imaging or vice versa.

The first energy range and the second energy range may be at least partially non-overlapping or totally non-overlapping.

In some embodiments, the second energy range comprises energies greater than the first energy range.

Herein, an energy range may refer to a contiguous set of energies. An energy range may also be referred to as an energy band or similar. The energy of radiation in an energy range may refer to the energy of the photons of the radiation. Instead of energy, related quantities, such as wavelength and/or frequency may be used.

The first plurality of detector rows can be configured to detect radiation in the first energy range and the second plurality of detector rows can be configured to detect radiation in the second energy range by, for example, configuring the properties of pixels in each detector row according to the energy range to be detected. For example, the material of the pixels and/or the geometry of the pixels can be chosen according to the energy range to be detected. Alternatively or additionally, in for example, scintillator-based detector pixels, the thickness of the scintillator material can be configured according to the energy range to be detected. Further, in some embodiments, filters can be used to block, at least partially, some energy ranges from entering some pixels.

The first plurality of detector rows 101 and the second plurality of detector rows 102 can be arranged for scanning an object moving in a movement direction 103. A number of the first plurality of detector rows 101 per distance along the movement direction 103 can be greater than a number of the second plurality of detector rows 102 per distance along the movement direction 103.

The movement direction 103 may be, for example, substantially perpendicular or perpendicular to the detector rows. For example, in the embodiment of Fig. 1, the detector rows are oriented along the viewing direction of Fig. 1 and the movement direction 103 is from left to right or from right to left.

The object may be moved along the movement direction by, for example, a conveyor belt or any other means.

The number of the first plurality of detector rows 101 per distance along the movement direction 103 may also be referred to as a density of the first plurality of detector rows 101 along the movement direction 103. The number of the second plurality of detector rows 102 per distance along the movement direction 103 may also be referred to as a density of the second plurality of detector rows 102 along the movement direction 103.

For example, in the embodiment of Fig. 1, the radiation detector arrangement 100 comprises three times the number of the first plurality of detector rows 101 per distance along the movement direction 103 compared to the number of the second plurality of detector rows 102 per distance along the movement direction 103.

It should be appreciated that that the embodiment of Fig. 1 only illustrates three detector rows of the first plurality of detector rows 101 and one row of the second plurality of detector rows 102. The radiation detector arrangement 100 may comprise any number of detector rows. For example, the arranged illustrated in the embodiment of Fig. 1 can be repeated any number of times in the movement direction 103 to form a radiation detector arrangement.

According to an embodiment, the radiation detector arrangement 100 further comprises a circuit board 105, wherein the first plurality of detector rows 101 is arranged onto a first side of the circuit board 105 and the second plurality of detector rows 102 is arranged onto a second side of the circuit board 105.

The circuit board 105 may comprise, for example, a printed circuit board (PCB) and/or a printed circuit board assembly (PCBA).

In some embodiments, the first plurality of detector rows 101 can be implemented, for example, using mainly low low-cost sensor types. The first plurality of detector rows 101 can be optimized for spatial resolution of imaging. For example, in many imaging applications, the spatial resolution may be mainly defined by the LE detectors with a thin scintillator.

The second plurality of detector rows 102 may require the use of higher-cost sensors. With the radiation detector arrangement 100, the number of these higher-cost sensors can be reduced. The second plurality of detector rows 102 can be optimized for dynamic range and/or material discrimination. For example, in many imaging applications, the dynamic range and steel penetration capabilities may be mainly defined by the HE detectors with a thick scintillator. The spatial resolution of the steel penetration can be limited by counting (Poisson) statistics and the absorption efficiency of the HE detectors.

Fig. 2 illustrates a schematic representation of a radiation detector arrangement according to another embodiment.

In the embodiment of Fig. 2, the radiation detector arrangement 100 comprises four times the number of the first plurality of detector rows 101 per distance along the movement direction 103 compared to the number of the second plurality of detector rows 102 per distance along the movement direction 103.

In other embodiments, the radiation detector arrangement 100 may comprise, for example, two, three, four, five, six, seven, eight, nine, or ten times the number of the first plurality of detector rows 101 per distance along the movement direction 103 compared to the number of the second plurality of detector rows 102 per distance along the movement direction 103.

Fig. 3 illustrates a schematic representation of a radiation detector arrangement according to another embodiment.

According to an embodiment, the radiation detector arrangement 100 further comprises at least one filter structure 303 arranged to block at least part of radiation outside the second energy range from entering the second plurality of detector rows 102.

For example, in the embodiment of Fig. 3, the at least one filter structure 303 comprises two filter structure layers arranged inside the circuit board 105. Thus, radiation incident from the top side of the circuit board 105 can be filtered by the at least one filter structure 303.

The at least one filter structure 303 may comprise, for example, any material, such as copper, that can block, via for example absorption, at least part of radiation outside the second energy range.

The at least one filer structure 303 may comprise, for example, copper. Thickness of the at least one filer structure 303 may be, for example, in the range 0.1 - 10 millimetres (mm), such as 1.5 mm.

The at least one filer structure 303 may also be referred to as a filter, a high-energy filter, an x-ray filter, or similar.

According to an embodiment, the first plurality of detector rows 101 comprises in-direct conversion detectors and the second plurality of detector rows 102 comprises in-direct conversion detectors.

Herein, an in-direct conversion detector may refer to a detector comprising a scintillator and a photodiode. The scintillator may be configured to convert photons of incident radiation into lower energy photons and the photodiode can be configured to detect the lower energy photons by converting the lower energy photons into charges.

For example, in the embodiment of Fig. 3, the first plurality of detector rows 101 comprises in-direct conversion detectors comprising a scintillator 301 and the second plurality of detector rows 103 comprises in-direct conversion detectors comprising a scintillator 302.

According to an embodiment, the first plurality of detector rows 101 comprises direct conversion detectors and the second plurality of detector rows 102 comprises in-direct conversion detectors.

Herein, a direction conversion detector may refer to a detector configured to detect incident radiation by converting photons of the incident radiation into charges without first converting the photons of the incident radiation into lower energy photons. Thus, direct conversion detectors may not require a scintillator.

According to an embodiment, the first plurality of detector rows 101 comprises in-direct conversion detectors and the second plurality of detector rows 102 comprises direct conversion detectors.

According to an embodiment, the first plurality of detector rows 101 comprises in-direct conversion detectors and the second plurality of detector rows 102 comprises direct conversion detectors.

In the embodiment of Fig. 3, the first/second detector rows 101, 102 further comprise a scintillator layer 301, 302. The scintillator layer 301, 302 may convert the incident radiation to lower energy electromagnetic radiation. The lower energy electromagnetic radiation can then be detected by, for example, photodiodes of the corresponding plurality of detector rows.

According to an embodiment, each direct conversion detector comprises a quantum dot diode or a cadmium telluride detector and/or each in-direct conversion detector comprises a scintillator and a quantum dot photo diode, a scintillator and a silicon photomultiplier, or a scintillator and a low-gain avalanche diode.

According to an embodiment, the direct conversion detectors are configured to operate in an energy integrating mode or in a photon counting mode and/or the in-direct conversion detectors are configured to operate in an energy integrating mode or in a photon counting mode.

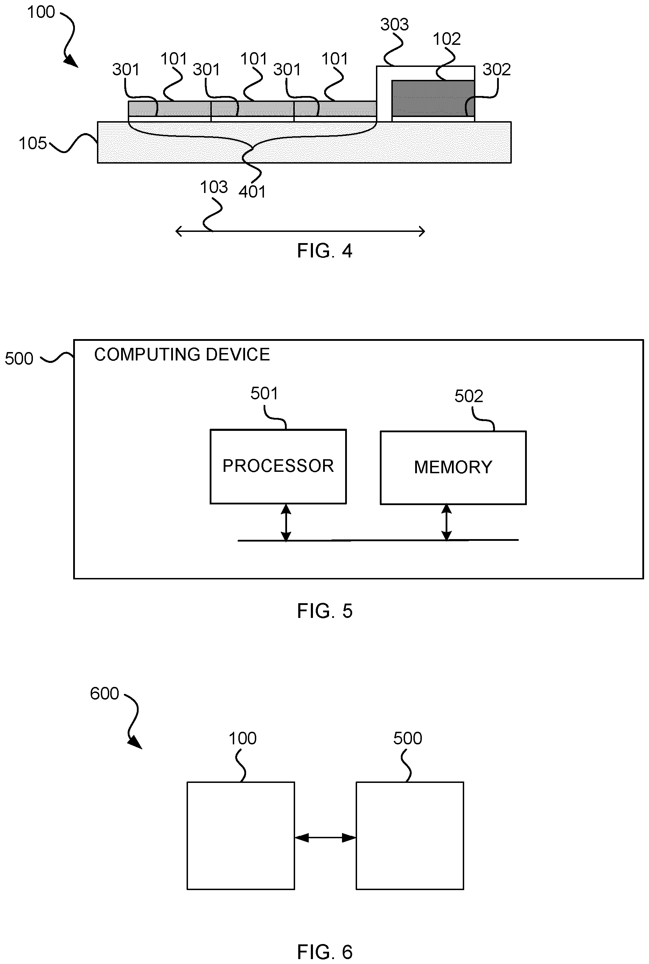

Fig. 4 illustrates a schematic representation of a radiation detector arrangement according to another embodiment.

According to an embodiment, the first plurality of detector rows 101 and the second plurality of detectors rows 102 are arranged to alternate between sets 401 of the first plurality of detector rows 101 and single rows of the second plurality of detectors rows 102 along the movement direction 103.

For example, in the embodiment of Fig. 4 there are three consecutive detector rows from the first plurality of detector rows 101 followed by one detector row from the second plurality of detector rows 102. Thus, the three consecutive detector rows from the first plurality of detector rows 101 form a set 401 of the first plurality of detector rows 101. This pattern can be repeated any number of times to form a radiation detector arrangement.

In the embodiment of Fig 4, at least one filter structure 303 is arranged at least partially encase the second plurality of detector rows 102. In the embodiment of Fig. 4, only one detector rows from the second plurality of detector rows 102 is illustrated. In other embodiments, each detector row in the second plurality of detector rows 102 may be at least partially encased by the at least one filter structure 303. At least partially encased may mean that the at least one filter structure 303 is arranged to block at least part of radiation outside the second energy range from entering the second plurality of detector rows 102 from at least one side. For example, in the embodiment of Fig. 4, the at least one filter structure 303 may be alternatively arranged on the top side of the second plurality of detector rows if the radiation is incident from the tops side.

Fig. 5 illustrates a schematic representation of a computing device according to an embodiment.

According to an embodiment, a computing device 500 comprises at least one processor 501 and at least one memory 502 including computer program code, the at least one memory 502 and the computer program code configured to, with the at least one processor 501, cause the computing device 500 to obtain a first plurality of signals from a first plurality of detector rows.

The at least one memory 502 and the computer program code may be further configured to, with the at least one processor 501, cause the computing device 500 to obtain a second plurality of signals from a second plurality of detector rows.

The first/second plurality of signals may be proportional to the intensity of the incident radiation at the location of a detector row at some instance of time. For example, each signal may be proportional to the number of events occurred in the pixel due to the incident radiation.

Herein, an event may refer to a photon of incident electromagnetic radiation being converted into a charge and the charge being detected.

The computing device 500 and/or some device may perform pre-processing based on the signals obtained from the plurality of pixels. The computing device 500 may then use the pre-processed signals for the consecutive operations. For example, the computing device 500 and/or some device may perform denoising and/or dark-frame subtraction.

Each signal in the first/second plurality of signals may correspond to a radiation intensity value for a detector in the first/second plurality of detector rows for a time slot. The computing device 500 may obtain the radiation intensity values by, for example, performing an analogue-to-digital conversion and scaling the result of the conversion appropriately. Alternatively or additionally, the computing device 500 may perform other operations and/or computations in order to obtain the radiation intensity value. Alternatively or additionally, some other device may perform at least a part of such processing.

Each detector row in the first/second plurality of detector rows may comprise a plurality of pixels. The first/second plurality of signals may indicate the intensity of the incident radiation at the location of each pixel of each detector row for a plurality of time slots.

The radiation intensity may also be referred to as an event count or similar. The obtained radiation intensity may also be referred to as measured radiation intensity, detected radiation intensity, or similar.

The at least one memory 502 and the computer program code may be further configured to, with the at least one processor 501, cause the computing device 500 to calculate an at least spatially filtered signal based on the first plurality of signals.

For example, the at least spatially filtered signal can be calculated using a moving average spatial filter:

$$E1F_z = \sum_{r=0}^{N_{TDI}-1} E1R_{z,r} \times \frac{1}{N_{TDI}},$$

where $E1F_z$ refers to the at least spatially filtered signal at time slot $z$, $E1R_{z,r}$ is the first plurality of signals, and $N_{TDI}$ is the number of detector rows and/or time slots used for the calculation. The first plurality of signals $E1R_{z,r}$ may comprise a signal for each row $r$ and for each time slot $z$.

In some embodiments, the at least spatially filtered signal can also be obtained in other ways. For example, the at least spatially filtered signal can be obtained by filtering the first plurality of signals also in the time domain. For example, the at least spatially filtered signal can be calculated as:

$$E1F_z = \sum_{r=0}^{N_{TDI}-1} \sum_{k=-n_{E1F}}^{n_{E1F}} E1R_{z+k,r} \times EF1K_k \times \frac{1}{N_{TDI}},$$

$$E1F_W = 2 \times n_{E1F} + 1,$$

where $EF1K_k$ refers to a kernel and $E1F_W$ refers to a length of the kernel in the time domain. The kernel can be used to perform convolution filtration in the time domain, such as averaging or gaussian filtering. Alternatively, other type of filtering, such as median filtering, can be used in the time domain.

The processing disclosed herein is described in terms of detector rows of the first/second plurality of detector rows. The same processing can be performed for each pixel of a detector row.

The at least one memory 502 and the computer program code may be further configured to, with the at least one processor 501, cause the computing device 500 to calculate a temporally filtered signal based on the second plurality of signals.

For example, the temporally filtered signal can be calculated using a moving average temporal filter:

$$E2F_z = \sum_{s=0}^{N_{TDI}-1} E2R_{z-s} \times \frac{1}{N_{TDI}},$$

where $E2F_z$ refers to the temporally filtered signal at time slot $z$, $E2R_z$ is the second plurality of signals, and $N_{TDI}$ is the number of detector rows and/or time slot used for the calculation. The second plurality of signals $E2R_z$ may comprise a signal for each time slot $z$.

Alternatively, any other type of filtering can be used. For example, a more general filtering can be calculated as

$$E2F_z = \sum_{k=-n_{E2F}}^{n_{E2F}} E2R_{z+k} \times EF2K_k,$$

$$E2F_W = 2 \times n_{E2F} + 1,$$

where $EF2K_k$ refers to a kernel and $E2F_W$ refers to a length of the kernel in the time domain. The kernel can be used to perform convolution filtration in the time domain, such as averaging or gaussian filtering. Alternatively, other type of filtering, such as median filtering, can be used in the time domain.

According to an embodiment, the at least one memory 502 and the computer program code are further configured to, with the at least one processor 501, cause the computing device 500 to: calculate the at least spatially filtered signal based on the first plurality of signals using a moving average spatial filter, a moving median spatial filter, a moving spatial gaussian filter, or a moving spatial low-pass filter and/or calculate the temporally filtered signal based on the second plurality of signals using a moving average temporal filter, a moving median temporal filter, a moving temporal gaussian filter, or a moving temporal low-pass filter.

In other embodiments, the at least spatially filtered signal and/or the temporally filtered signal may be calculated using any other type of filter.

The at least one memory 502 and the computer program code may be further configured to, with the at least one processor 501, cause the computing device 500 to calculate a filtered ratio based on the at least spatially filtered signal and the temporally filtered signal.

Thus, the filtered radio may comprise a ratio of the temporally filtered signal and the at least spatially filtered signal. In other embodiments, filtered radio may calculated in other ways. For example, in some embodiments, the filtered radio may comprise a ratio of the at least spatially filtered signal and the temporally filtered signal.

The filtered radio $RF_z$ can be calculated, for example, as

$$RF_z = \text{if}(E1F_z = 0, R_{\max}, E2F_z/E1F_z)$$

Herein, an expression of the form if(x,y,z) may indicate that if $x$ is true, $y$ is used and if $x$ is not true, $z$ is used. Thus, for example, in the above expression, if $E1F_z = 0$, $RF_z = R_{max}$, and if $E1F_z \neq 0$, $RF_z = E2F_z/E1F_z$. $R_{max}$ can be set to, for example, be equal to 10. Thus, if the at least spatially filtered signal $E1F_z$ is equal to zero, division by zero can be circumvented.

The at least one memory 502 and the computer program code may be further configured to, with the at least one processor 501, cause the computing device 500 to calculate a first spatial output signal based on the first plurality of signals using time delay integration.

For example, the first spatial output signal $E1TDI_z$ can be calculated using time delay integration:

$$E1TDI_z = \sum_{r=0}^{N_{TDI}-1} E1R_{z-r,r} \times \frac{1}{N_{TDI}},$$

where $E1TDI_z$ is the spatial output signal of row z of the first plurality of detector rows, $E1R_{z,r}$ is the first plurality of signals, and $N_{TDI}$ is the number of detector rows and/or time slots used for the calculation.

In other embodiments, TDI can be calculated using a sum, such as:

$$E1TDI_z = \sum_{r=0}^{N_{TDI}-1} E1R_{z-r,r}$$

The first spatial output signal may correspond to the spatial distribution of the radiation detected by the first plurality of detector rows during, for example, an imaging process. For example, an object may be imaged while the object moves along the movement direction and the first spatial output signal may be used to form an image of the object in the first energy range.

The at least one memory 502 and the computer program code may be further configured to, with the at least one processor 501, cause the computing device 500 to calculate a second spatial output signal based on the filtered ratio and the first spatial output signal.

For example, the second spatial output signal $E2_z$ can be calculated as:

$$E2I_z = \text{if}(E2F_z < SP_{\text{limit}}, E2F_z, RF_z \times E1TDI_z)$$

$$E2_z = \text{if}(N_{TDI} = 1, E2R_z, E2I_z)$$

$SP_{\text{limit}}$ can be set to optimize the signal-to-noise ratio for a dense object where the signal level is low. In the second equation above, in the case of one-row spatial signal, the recovery calculation is not needed and the second spatial output signal can be set to be equal to the second plurality of signals $E2R_z$.

The second spatial output signal may correspond to the spatial distribution of the radiation detected by the second plurality of detector rows during, for example, an imaging process. For example, an object may be imaged while the object moves along the movement direction and the second spatial output signal may be used to form an image of the object. Since there is a smaller number of the second plurality of detector rows than of the first plurality of detector rows, the computing device 500 can utilize the spatial information from all detector rows to improve the resolution of spatial distribution of radiation in the second energy range via the calculations disclosed herein.

The first and second spatial output signals can be used to, for example, form a composite image of the object being imaged. Since the first/second plurality of detector rows are configured to detect radiation in the first/second energy range, radiation in the first/second energy range can propagate differently through the object, the composite image can be used to, for example, image the inside of the object.

In other embodiments, the various calculations can be performed in other ways also.

For example, in some embodiments, the at least spatially filtered signal can be calculated as:

$$E1F_z = \sum_{r=N_{TDI}-1}^{0} E1R_{z,r} \times \frac{1}{N_{TDI}}.$$

In some embodiments, the temporally filtered signal can be calculated as:

$$E2F_z = \sum_{s=N_{TDI}-1}^{0} E2R_{z-s} \times \frac{1}{N_{TDI}}.$$

In some embodiments, the filtered radio $RF_z$ can be calculated as:

$$RF_z = \frac{E2F_z}{E1F_z}.$$

In some embodiments, the first spatial output signal $E1TDI_z$ can be calculated using time delay integration:

$$E1TDI_z = \sum_{r=0}^{N_{TDI}-1} E1R_{z-r,r} \times \frac{1}{N_{TDI}}.$$

In some embodiments, the second spatial output signal $E2_z$ can be calculated as:

$$E2_z = RF_z \times E1TDI_z.$$

It should be appreciated that the calculation operations disclosed herein can be performed in various orders. For example, in some embodiments, the first spatial output signal may be calculated before calculating the at least spatially filtered signal and/or the temporally filtered signal. In other embodiments, the first spatial output signal may be calculated after calculating the at least spatially filtered signal and/or the temporally filtered signal. Similarly, in any embodiment, the at least spatially filtered signal can be calculated before or after calculating the temporally filtered signal.

The computing device 500 may comprise at least one processor 501. The at least one processor 501 may comprise, for example, one or more of various processing devices, such as a co-processor, a microprocessor, a controller, a digital signal processor (DSP), a processing circuitry with or without an accompanying DSP, or various other processing devices including integrated circuits such as, for example, an application-specific integrated circuit (ASIC), a field-programmable gate array (FPGA), a microcontroller unit (MCU), a hardware accelerator, a special-purpose computer chip, or the like.

The computing device 500 may further comprise a memory 502. The memory 502 may be configured to store, for example, computer programs and the like. The memory may comprise one or more volatile memory devices, one or more non-volatile memory devices, and/or a combination of one or more volatile memory devices and non-volatile memory devices. For example, the memory may be embodied as magnetic storage devices (such as hard disk drives, floppy disks, magnetic tapes, etc.), optical magnetic storage devices, and semiconductor memories (such as mask ROM, PROM (programmable ROM), EPROM (erasable PROM), flash ROM, RAM (random access memory), etc.).

When the computing device 500 is configured to implement some functionality, some component and/or components of the computing device 500, such as the at least one processor 501 and/or the memory 502, may be configured to implement this functionality. Furthermore, when the at least one processor 501 is configured to implement some functionality, this functionality may be implemented using program code comprised, for example, in the memory 502.

The computing device 500 may also be referred to as a signal processing unit, a processing unit, a processing unit, or similar.

Since the second plurality of detector rows is able to detect only incident radiation in the second energy range, information about the intensity of the incident radiation in the first energy range at the locations of the detector rows in the second subset may be lost. Thus, the imaging resolution may be reduced. The computing device 500 may approximate the lost information by using the imaging information from other detector rows as disclosed above. Thus, the computing device 500 may improve the imaging quality. For example, in the applications where the second spatial output signal, such as a signal from HE detector rows, is mainly used for material discrimination, this can achieve a satisfactory spatial resolution while costs can be reduced due to using a smaller number of detector rows in the second plurality of detector rows.

Fig. 6 illustrates a schematic representation of an imaging apparatus according to an embodiment.

According to an embodiment, an imaging apparatus 600 comprises the radiation detector arrangement 100 and the computing device 500.

For example, the computing device 500 may be electrically coupled to each detector row of the detector arrangement 100.

The computing device 500 may be, for example, electrically coupled to detector row in the first/second plurality of detector rows. In some embodiments, the computing device 500 may be implemented as an application-specific integrated circuit (ASIC). In some further embodiments, the ASIC may be integrated with the radiation detector arrangement 100 into a single unit. In other embodiments, the computing device 500 may be embodied in a separate device from the radiation detector arrangement 100.

The imaging apparatus 600 may be embodied in, for example, a dual energy x-ray or gamma ray imaging apparatus.

The imaging apparatus 600 may further comprise other components not illustrated in the embodiment of Fig. 6. For example, the imaging apparatus 600 may further comprise an x-ray radiation source. The x-ray radiation source may be arranged to provide x-ray radiation, wherein the x-ray radiation propagates through an object to being imaged and then hits the detector arrangement 100.

The imaging apparatus 600 can be utilized in, for example, security applications and non-destructive testing applications. For example, the imaging apparatus 600 can be used to scan luggage in airports, to inspect the internal structure of various products, such as batteries, and/or to determine the material composition of an object.

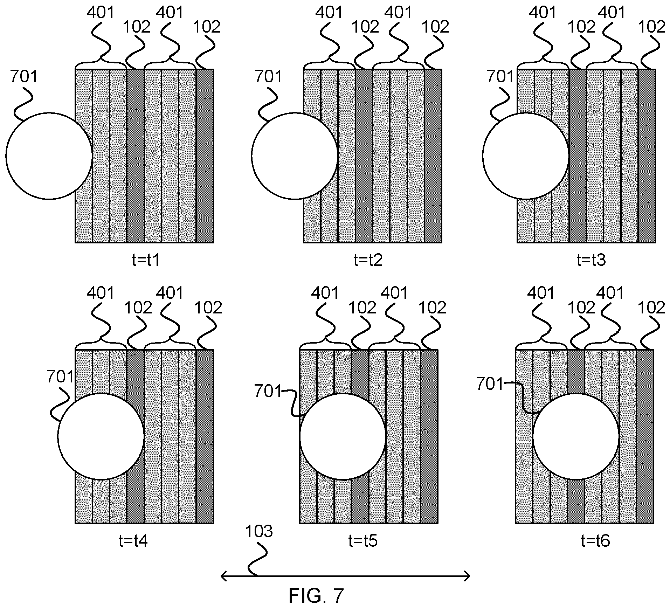

Fig. 7 illustrates a schematic representation of an object being scanned during a plurality of time frames.

In the embodiment of Fig. 7, the movement of an object 701 during an imaging process is illustrated. The object 701 moves from left to right along the movement direction 103 and the position of the object 701 is illustrated for six time slots. The time slots are notated by t1, t2, t3, t4, t5, and t6 in Fig. 7.

As the object 701 moves, different parts of the object 701 are aligned with different detector rows during each time slot. For example, a part of the object 701 that is aligned with the left-most detector row during time slot t1 is aligned with the second left-most detector row during time slot t2 and so on.

Due to the sparseness of the second plurality of detector rows 102, less information may be obtained about the second energy range during an imaging process. The method 800 and the computing device 500 can utilize signals from the first plurality of detector rows 101 to improve the spatial resolution of the second plurality of detector rows 102.

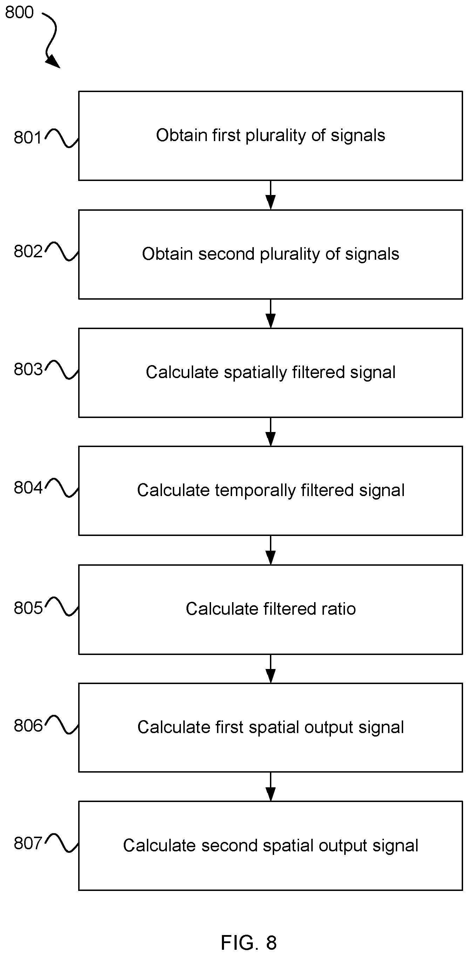

Fig. 8 illustrates a flowchart representation of a method according to an embodiment.

According to an embodiment the method 800 comprises obtaining 801 a first plurality of signals from a first plurality of detector rows.

The method 800 may further comprise obtaining 802 a second plurality of signals from a second plurality of detector rows.

The method 800 may further comprise calculating 803 an at least spatially filtered signal based on the first plurality of signals.

The method 800 may further comprise calculating 804 a temporally filtered signal based on the second plurality of signals.

The method 800 may further comprise calculating 805 a filtered ratio based on the at least spatially filtered signal and the temporally filtered signal.

The method 800 may further comprise calculating 806 a first spatial output signal based on the first plurality of signals using time delay integration.

The method 800 may further comprise calculating 807 second spatial output signal based on the filtered ratio and the first spatial output signal.

According to an embodiment, the calculating 803 the at least spatially filtered signal based on the first plurality of signals is performed using a moving average spatial filter, a moving median spatial filter, a moving spatial gaussian filter, or a moving spatial low-pass filter and/or the calculating 804 the temporally filtered signal based on the first plurality of signals is performed using a moving average temporal filter, a moving median temporal filter, a moving temporal gaussian filter, or a moving temporal low-pass filter.

The method 800 may be performed by, for example, the computing device 500.

Any disclosure herein in relation to the computing device 500 may also apply to the method 800.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

**Claims**

1. A radiation detector arrangement (100), comprising:

   a first plurality of detector rows (101) configured to detect radiation in a first energy range; and
   a second plurality of detector rows (102) configured to detect radiation in a second energy range, wherein the second energy range is different from the first energy range;
   wherein the first plurality of detector rows (101) and the second plurality of detector rows (102) are arranged for scanning an object moving in a movement direction (103) and a number of the first plurality of detector rows (101) per distance along the movement direction (103) is greater than a number of the second plurality of detector rows (102) per distance along the movement direction (103).

2. The radiation detector arrangement (100) according to claim 1, further comprising a circuit board (105), wherein the first plurality of detector rows (101) is arranged onto a first side of the circuit board (105) and the second plurality of detector rows (102) is arranged onto a second side of the circuit board (105) .

3. The radiation detector arrangement (100) according to claim 1, wherein the first plurality of detector rows (101) and the second plurality of detectors rows (102) are arranged to alternate between sets (401) of the first plurality of detector rows (101) and single rows of the second plurality of detectors rows (102) along the movement direction (103).

4. The radiation detector arrangement (100) according to any preceding claim, wherein:

   the first plurality of detector rows (101) comprises in-direct conversion detectors and the second plurality of detector rows (102) comprises in-direct conversion detectors;
   the first plurality of detector rows (101) comprises direct conversion detectors and the second plurality of detector rows (102) comprises in-direct conversion detectors;
   the first plurality of detector rows (101) comprises in-direct conversion detectors and the second plurality of detector rows (102) comprises direct conversion detectors; or
   the first plurality of detector rows (101) comprises in-direct conversion detectors and the second plurality of detector rows (102) comprises direct conversion detectors.

5. The radiation detector arrangement (100) according to claim 4, wherein each direct conversion detector comprises a quantum dot diode or a cadmium telluride detector and/or each in-direct conversion detector comprises a scintillator and a quantum dot photo diode, a scintillator and a silicon photomultiplier, or a scintillator and a low-gain avalanche diode.

6. The radiation detector arrangement (100) according to claim 4 or claim 5, wherein the direct conversion detectors are configured to operate in an energy integrating mode or in a photon counting mode and/or the in-direct conversion detectors are configured to operate in an energy integrating mode or in a photon counting mode.

7. The radiation detector arrangement (100) according to any preceding claim, further comprising at least one filter structure (303) arranged to block at least part of radiation outside the second energy range from entering the second plurality of detector rows (102) .

8. A computing device (500) comprising at least one processor (501) and at least one memory (502) including computer program code, the at least one memory (502) and the computer program code configured to, with the at least one processor (501), cause the computing device (500) to:

 obtain a first plurality of signals from a first plurality of detector rows;
 obtain a second plurality of signals from a second plurality of detector rows;
 calculate an at least spatially filtered signal based on the first plurality of signals;
 calculate a temporally filtered signal based on the second plurality of signals;
 calculate a filtered ratio based on the at least spatially filtered signal and the temporally filtered signal;
 calculate a first spatial output signal based on the first plurality of signals using time delay integration; and
 calculate a second spatial output signal based on the filtered ratio and the first spatial output signal.

9. The computing device (500) according to claim 8, wherein the at least one memory (502) and the computer program code are further configured to, with the at least one processor (501), cause the computing device (500) to calculate the at least spatially filtered signal based on the first plurality of signals using a moving average spatial filter, a moving median spatial filter, a moving spatial gaussian filter, or a moving spatial low-pass filter and/or calculate the temporally filtered signal based on the second plurality of signals using a moving average temporal filter, a moving median temporal filter, a moving temporal gaussian filter, or a moving temporal low-pass filter.

10. An imaging apparatus (600) comprising the radiation detector arrangement (100) according to any of claims 1 - 7 and the computing device (500) according to any of claims 8 - 9.

11. A method (800) comprising:

 obtaining (801) a first plurality of signals from a first plurality of detector rows;
 obtaining (802) a second plurality of signals from a second plurality of detector rows;
 calculating (803) an at least spatially filtered signal based on the first plurality of signals;
 calculating (804) a temporally filtered signal based on the second plurality of signals;
 calculating (805) a filtered ratio based on the at least spatially filtered signal and the temporally filtered signal;
 calculating (806) a first spatial output signal based on the first plurality of signals using time delay integration; and
 calculating (807) second spatial output signal based on the filtered ratio and the first spatial output signal.

12. The method (800) according to claim 10, wherein the calculating (803) the at least spatially filtered signal based on the first plurality of signals is performed using a moving average spatial filter, a moving median spatial filter, a moving spatial gaussian filter, or a moving spatial low-pass filter and/or the calculating (804) the temporally filtered signal based on the first plurality of signals is performed using a moving average temporal filter, a moving median temporal filter, a moving temporal gaussian filter, or a moving temporal low-pass filter.

13. A computer program product comprising program code configured to perform the method according to claim 11 or claim 12 when the computer program product is executed on a computer.

100

101    101    101

105

103

102

FIG. 1

100

101    101    101    101

105

103    102

FIG. 2

100

301  101  301  101  301  101

105

303
303

302

103    102

FIG. 3

100

303 102

301 101 301 101 301 101 302

105

103 401

FIG. 4

500

COMPUTING DEVICE

501

502

PROCESSOR

MEMORY

FIG. 5

600

100

500

FIG. 6

FIG. 7

800

| 801 | Obtain first plurality of signals |
|---|---|

↓

| 802 | Obtain second plurality of signals |
|---|---|

↓

| 803 | Calculate spatially filtered signal |
|---|---|

↓

| 804 | Calculate temporally filtered signal |
|---|---|

↓

| 805 | Calculate filtered ratio |
|---|---|

↓

| 806 | Calculate first spatial output signal |
|---|---|

↓

| 807 | Calculate second spatial output signal |
|---|---|

FIG. 8

Europäisches
Patentamt

European
Patent Office

Office européen
des brevets

# EUROPEAN SEARCH REPORT

**Application Number**

EP 23 20 4260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/042929 A1 (ZHANG LI [CN] ET AL) 10 February 2022 (2022-02-10) * paragraphs [0065], [0080]; figure * | 1,4-6 | INV. G01T1/24 G01V5/22 G01T1/20 |
| X | EP 2 749 873 A1 (NUCTECH CO LTD [CN]; UNIV TSINGHUA [CN]) 2 July 2014 (2014-07-02) * paragraphs [0037], [0032], [0033]; figures * | 1,4-7 | |
| X | EP 2 960 686 A1 (UNIV TSINGHUA [CN]; NUCTECH CO LTD [CN]) 30 December 2015 (2015-12-30) * paragraphs [0033], [0036], [0040]; claims; figures * | 1,2,4-6 | |
| X | US 2014/198899 A1 (ZISKIN VITALIY [US] ET AL) 17 July 2014 (2014-07-17) * paragraph [0103] - paragraph [0104]; figures * | 1,3-7 | |
| A | US 10 234 571 B1 (TORNGA SHAWN ROBERT [US] ET AL) 19 March 2019 (2019-03-19) * column 5, line 46 - line 61 * | 5,6 | TECHNICAL FIELDS SEARCHED (IPC) G01T G01V |
| A | US 2022/222793 A1 (FRANK ALEXANDER [DE]) 14 July 2022 (2022-07-14) * paragraph [0077] - paragraph [0079]; claim 9; figures * | 8-13 | |
| A | US 2023/263491 A1 (MATIKKALA MIKKO [FI]) 24 August 2023 (2023-08-24) * paragraphs [0055], [0120], [0013], [0086]; figures * | 8-13 | |

The present search report has been drawn up for all claims

| Place of search | Date of completion of the search | Examiner |
|---|---|---|
| The Hague | 17 May 2024 | Eberle, Katja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 23 20 4260

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

The Search Division considers that the present European patent application does not comply with the requirements of unity of invention and relates to several inventions or groups of inventions, namely:

1. claims: 1-7

    A radiation detector arrangement, comprising:
    a first plurality of detector rows configured to detect radiation in a first energy range; and
    a second plurality of detector rows configured to detect radiation in a second energy range, wherein the second energy range is different from the first energy range; wherein the first plurality of detector rows and the second plurality of detector rows are arranged for scanning an object moving in a movement direction and a number of the first plurality of detector rows per distance along the movement direction is greater than a number of the second plurality of detector rows per distance along the movement direction.

    ---

2. claims: 8-13

    A computing device comprising at least one processor and at least one memory including computer program code, the at least one memory and the computer program code configured to, with the at least one processor, cause the computing device to:obtain a first plurality of signals from a first plurality of detector rows;obtain a second plurality of signals from a second plurality of detector rows;calculate an at least spatially filtered signal based on the first plurality of signals;calculate a temporally filtered signal based on the second plurality of signals;calculate a filtered ratio based on the at least spatially filtered signal and the temporally filtered signal;calculate a first spatial output signal based on the first plurality of signals using time delay integration; and calculate a second spatial output signal based on the filtered ratio and the first spatial output signal.

    ---

# EP 4 542 266 A1

## ANNEX TO THE EUROPEAN SEARCH REPORT
## ON EUROPEAN PATENT APPLICATION NO.

EP 23 20 4260

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2024

| Patent document cited in search report | | | Publication date | Patent family member(s) | | | Publication date |
|---|---|---|---|---|---|---|---|
| US 2022042929 | A1 | | 10-02-2022 | CN | 109471185 | A | 15-03-2019 |
| | | | | EP | 3901669 | A1 | 27-10-2021 |
| | | | | JP | 7145326 | B2 | 30-09-2022 |
| | | | | JP | 2022502199 | A | 11-01-2022 |
| | | | | SG | 11202103349R | A | 28-05-2021 |
| | | | | US | 2022042929 | A1 | 10-02-2022 |
| | | | | WO | 2020125080 | A1 | 25-06-2020 |
| EP 2749873 | A1 | | 02-07-2014 | AU | 2013324945 | A1 | 26-02-2015 |
| | | | | BR | 112015003336 | A2 | 19-12-2017 |
| | | | | CN | 103675931 | A | 26-03-2014 |
| | | | | EP | 2749873 | A1 | 02-07-2014 |
| | | | | ES | 2674124 | T3 | 27-06-2018 |
| | | | | JP | 6132916 | B2 | 24-05-2017 |
| | | | | JP | 2015532974 | A | 16-11-2015 |
| | | | | KR | 20150077415 | A | 07-07-2015 |
| | | | | KR | 20160148049 | A | 23-12-2016 |
| | | | | NO | 2749873 | T3 | 21-07-2018 |
| | | | | PL | 2749873 | T3 | 28-09-2018 |
| | | | | US | 2014270058 | A1 | 18-09-2014 |
| | | | | WO | 2014048163 | A1 | 03-04-2014 |
| EP 2960686 | A1 | | 30-12-2015 | AU | 2015281626 | A1 | 20-10-2016 |
| | | | | CN | 105242322 | A | 13-01-2016 |
| | | | | EP | 2960686 | A1 | 30-12-2015 |
| | | | | ES | 2743536 | T3 | 19-02-2020 |
| | | | | HK | 1218163 | A1 | 03-02-2017 |
| | | | | JP | 6255369 | B2 | 27-12-2017 |
| | | | | JP | 2016029367 | A | 03-03-2016 |
| | | | | KR | 20170072170 | A | 26-06-2017 |
| | | | | MX | 364225 | B | 16-04-2019 |
| | | | | MY | 185716 | A | 31-05-2021 |
| | | | | PL | 2960686 | T3 | 31-10-2019 |
| | | | | RU | 2599276 | C1 | 10-10-2016 |
| | | | | SG | 11201608668U | A | 27-01-2017 |
| | | | | US | 2015378047 | A1 | 31-12-2015 |
| | | | | WO | 2015196857 | A1 | 30-12-2015 |
| US 2014198899 | A1 | | 17-07-2014 | US | 2014198899 | A1 | 17-07-2014 |
| | | | | WO | 2014110377 | A2 | 17-07-2014 |
| US 10234571 | B1 | | 19-03-2019 | NONE | | | |
| US 2022222793 | A1 | | 14-07-2022 | CN | 113454493 | A | 28-09-2021 |
| | | | | DE | 102018133525 | A1 | 25-06-2020 |
| | | | | EP | 3899597 | A1 | 27-10-2021 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

**EP 23 20 4260**

This annex lists the patent family members relating to the patent documents cited in the above-mentioned European search report.
The members are as contained in the European Patent Office EDP file on
The European Patent Office is in no way liable for these particulars which are merely given for the purpose of information.

**17-05-2024**

| Patent document cited in search report | Publication date | Patent family member(s) | | Publication date |
|---|---|---|---|---|
| | | US 2022222793 A1 | | 14-07-2022 |
| | | WO 2020127989 A1 | | 25-06-2020 |
| US 2023263491 A1 | 24-08-2023 | CN 116261678 A | | 13-06-2023 |
| | | EP 3974872 A1 | | 30-03-2022 |
| | | JP 2023542851 A | | 12-10-2023 |
| | | US 2023263491 A1 | | 24-08-2023 |
| | | WO 2022069796 A1 | | 07-04-2022 |

EPO FORM P0459

For more details about this annex : see Official Journal of the European Patent Office, No. 12/82

**page 2 of 2**